# EUROPEAN PATENT APPLICATION

(11) **EP 4 084 114 A1**
(43) Date of publication of application: **02.11.2022**
(21) Application number: 20904545.9
(22) Date of filing: 15.12.2020
(51) Int. Cl.: H01M 4/13, H01M 10/052, H01M 10/0587

(54) **NON-AQUEOUS ELECTROLYTE SECONDARY BATTERY AND METHOD FOR MANUFACTURING SAME**

(30) Priority: 27.12.2019 JP 2019237804
(71) Applicant: SANYO Electric Co., Ltd., Daito-shi Osaka 574-8534 (JP)
(72) Inventor: OGAWA, Shuji, Osaka 540-6207 (JP); HOSOKAWA, Takashi, Osaka 540-6207 (JP); HOSOKAWA, Takafumi, Osaka 540-6207 (JP)
(74) Representative: Novagraaf International SA
(86) International application number: PCT/JP2020/046643
(87) International publication number: WO 2021/131881

(57) **Abstract**

This non-aqueous electrolyte secondary battery comprises an electrode body in which a first separator, a positive electrode plate, a second separator, and a negative electrode plate are layered and coiled for 10 or more turns. The electrode body includes: a flat section in which the outer peripheral surface is flat; and two curved surface sections which are disposed at both ends in a first direction of the flat section and in which the outer peripheral surface is curved. The non-aqueous electrolyte secondary battery includes: a winding-end tape that is adhered to the outermost peripheral surface of the electrode body; and a positive electrode protective tape that is adhered to a winding-start-side end section on the inner peripheral side of the positive electrode plate. The winding-end tape is disposed on one of the two curved surface sections, and the positive electrode protective tape is disposed on either of the curved surface sections along the curved surface of the winding-start-side end section of the positive electrode plate.

## Description

### TECHNICAL FIELD

The present disclosure relates to a non-aqueous electrolyte secondary battery and a method for manufacturing the same.

### BACKGROUND ART

In recent years, as secondary batteries that implement high output powers and high energy densities, non-aqueous electrolyte secondary batteries represented by lithium ion batteries have been widely used.

Patent Literature 1 describes a rectangular non-aqueous electrolyte secondary battery in which a flat wound-shaped electrode assembly obtained by winding a positive electrode plate and a negative electrode plate through a separator is housed in a case.

### CITATION LIST

### PATENT LITERATURE

PATENT LITERATURE 1: JP 2014-56742 A

### SUMMARY

To further increase an energy density in a non-aqueous electrolyte secondary battery, the positive electrode density of a positive electrode plate may be increased. On the other hand, when the positive electrode density increases, the rigidity of an electrode assembly increases, resulting in deterioration in moldability in forming a flat wound-shaped electrode assembly having a large number of turns. As a result, dimensions such as a thickness greatly vary at the time of manufacturing the electrode assembly. This causes deterioration in productivity of the non-aqueous electrolyte secondary battery. A winding-end tape for winding fastening may be fixed to the outermost periphery of the electrode assembly. In this case, moldability in forming the electrode assembly may deteriorate depending on a position of the winding-end tape. Thus, the dimensions of the electrode assembly may greatly vary. When a winding-start-side end portion on the inner periphery side of the positive electrode plate directly contacts another member such as a separator, moldability may also deteriorate. Thus, the dimensions of the electrode assembly may greatly vary.

A non-aqueous electrolyte secondary battery according to an aspect of the present disclosure is a non-aqueous electrolyte secondary battery comprising an electrode assembly in which a first separator, a positive electrode plate, a second separator, and a negative electrode plate are wound 10 or more turns by overlapping one another such that the first separator or the second separator is interposed between at least the positive electrode plate and the negative electrode plate, the electrode assembly including a flat portion having a flat outer peripheral surface and two curved surface portions respectively arranged at both ends in a first direction of the flat portion and each having a curved outer peripheral surface, a winding-end tape attached to an outermost peripheral surface of the electrode assembly to fix a winding-end end portion of the electrode assembly to an outermost peripheral surface of the electrode assembly, and a positive electrode protection tape attached to a winding-start-side end portion on the inner periphery side of the positive electrode plate, in which the winding-end tape is arranged in one of the two curved surface portions, and the positive electrode protection tape is arranged along a curved surface of the winding-start-side end portion of the positive electrode plate in one or the other of the two curved surface portions.

A method for manufacturing the non-aqueous electrolyte secondary battery according to the aspect of the present disclosure is a method for manufacturing a non-aqueous electrolyte secondary battery according to the present disclosure, the method including a pre-press electrode assembly formation step in which the first separator, the positive electrode plate, the second separator, and the negative electrode plate are wound 10 or more turns by overlapping one another such that the first separator or the second separator is interposed between at least the positive electrode plate and the negative electrode plate to form a pre-press electrode assembly, and a molding press step in which the pre-press electrode assembly is pressed in a direction perpendicular to the first direction to mold the electrode assembly in a flat-shape after the pre-press electrode assembly formation step.

The non-aqueous electrolyte secondary battery and the method for manufacturing the same according to the aspect of the present disclosure make it possible to increase the moldability of an electrode assembly in a configuration in which the number of turns of the electrode assembly is large, thereby making it possible to prevent dimensions of the electrode assembly from varying at the time of manufacture.

### BRIEF DESCRIPTION OF DRAWINGS

FIG. 1 is a sectional view of a non-aqueous electrolyte secondary battery in an example of an embodiment.
FIG. 2 is a plan view of the non-aqueous electrolyte secondary battery illustrated in FIG. 1.
FIG. 3 is a diagram corresponding to a cross section A-A illustrated in FIG. 1 in an electrode assembly constituting the non-aqueous electrolyte secondary battery illustrated in FIG. 1.
FIG. 4 is a diagram illustrating a winding-start-side end portion of a positive electrode plate and a positive electrode protection tape in the electrode assembly illustrated in FIG. 3.
FIG. 5 is a diagram illustrating a positional relationship between respective winding-start-side end portions of the positive electrode plate and a negative electrode plate when it is assumed that the winding-start-side end portion of the negative electrode plate is positioned closer to the inner periphery side than the winding-start-side end portion of the positive electrode plate by 0.5 layers in the electrode assembly illustrated in FIG. 3.
FIG. 6 is a flow chart illustrating a method for manufacturing the non-aqueous electrolyte secondary battery in the example of the embodiment.
FIG. 7 is a diagram illustrating a positive electrode protection tape in another example attached to the winding-start-side end portion of the positive electrode plate.
FIG. 8 is a diagram corresponding to FIG. 3 in an electrode assembly constituting a non-aqueous electrolyte secondary battery in a comparative example 1.
FIG. 9 is a diagram corresponding to FIG. 3 in an electrode assembly constituting a non-aqueous electrolyte secondary battery in a comparative example 2.
FIG. 10 is a diagram corresponding to FIG. 3 in an electrode assembly constituting a non-aqueous electrolyte secondary battery in a comparative example 3.
FIG. 11 is a diagram corresponding to FIG. 3 in an electrode assembly constituting a non-aqueous electrolyte secondary battery in a comparative example 4.

### DESCRIPTION OF EMBODIMENTS

As a result of intensive studies to solve the above-described problem, the present inventors have found that a non-aqueous electrolyte secondary battery comprises an electrode assembly in which a first separator, a positive electrode plate, a second separator, and a negative electrode plate are wound 10 or more turns by overlapping one another such that the first separator or the second separator is interposed between at least the positive electrode plate and the negative electrode plate, the electrode assembly being configured to include a flat portion having a flat outer peripheral surface and two curved surface portions respectively arranged at both ends in a first direction of the flat portion and each having a curved outer peripheral surface, a winding-end tape fixed to an outermost peripheral surface of the electrode assembly, and a positive electrode protection tape attached to a winding-start-side end portion on the inner periphery side of the positive electrode plate, in which the winding-end tape is arranged in one of the two curved surface portions, and the positive electrode protection tape is arranged along a curved surface of the winding-start-side end portion of the positive electrode plate in one or the other of the two curved surface portions, whereby moldability of the electrode assembly can be increased so that dimensions of the electrode assembly can be prevented from varying at the time of manufacture. This will be described in detail below.

An example of an embodiment of the present disclosure will be described in detail below. In the following description, specific shapes, materials, directions, and numerical values, for example, are examples to facilitate understanding of the present disclosure, and can be appropriately changed to match uses, purposes, and specifications, for example. A rectangular battery in which a wound electrode assembly is housed in a battery case as a rectangular metallic case will be described below.

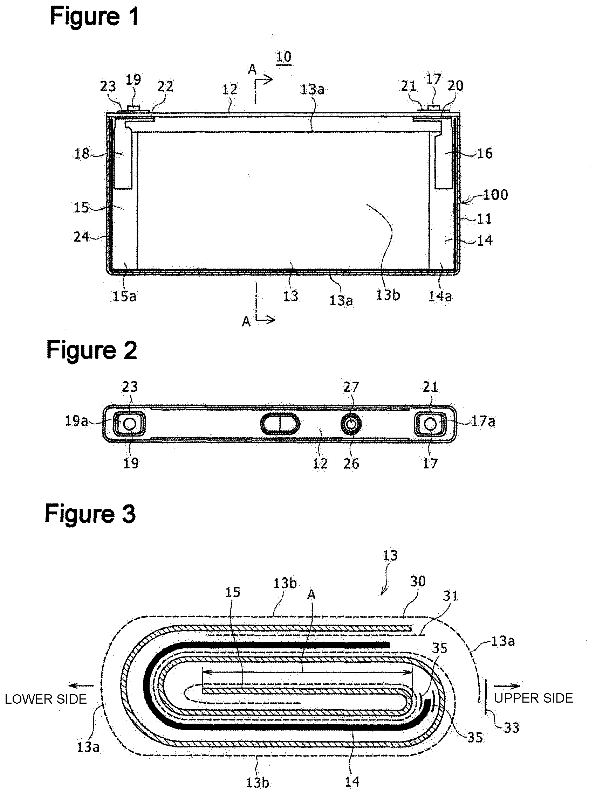

FIG. 1 is a sectional view of a non-aqueous electrolyte secondary battery 10, and FIG. 2 is a plan view of the non-aqueous electrolyte secondary battery 10. FIG. 3 is a diagram corresponding to a cross section A-A illustrated in FIG. 1 in an electrode assembly 13 constituting the non-aqueous electrolyte secondary battery 10. The non-aqueous electrolyte secondary battery 10 will be hereinafter referred to as the battery 10. The battery 10 comprises a rectangular sheathing member 11 having an opening at its top and a sealing plate 12 that closes the opening. The sheathing member 11 has a bottom portion having a substantially rectangular shape in a bottom view and a sidewall portion provided to stand at a peripheral edge of the bottom portion. The sidewall portion is formed to be substantially perpendicular to the bottom portion. The sheathing member 11 and the sealing plate 12 constitute a battery case 100. Both the sheathing member 11 and the sealing plate 12 are each made of a metal, and are each preferably made of aluminum or an aluminum alloy.

The battery 10 comprises a flat-shaped wound electrode assembly 13 and a non-aqueous electrolyte. As illustrated in FIG. 3, the electrode assembly 13 is formed when a first separator 30, a positive electrode plate 14, a second separator 31, and a negative electrode plate 15 are wound 10 or more turns by overlapping one another such that the first separator 30 or the second separator 31 is interposed between at least the positive electrode plate 14 and the negative electrode plate 15. In FIG. 3, to make it easy to understand a relationship among components of the electrode assembly 13, the number of turns is extremely reduced from an actual number of turns, where a solid thick line indicates the positive electrode plate 14, a line hatched in its inside indicates the negative electrode plate 15, and a broken line indicates the first separator 30 and the second separator 31. Only a winding-end end portion on the outer periphery side of the second separator 31 is illustrated. The electrode assembly 13 and the non-aqueous electrolyte are housed in the battery case 100. In the electrode assembly 13, a direction perpendicular to a longitudinal direction of the electrode plate (the positive electrode plate 14 and the negative electrode plate 15) is a winding axis direction, and the winding axis direction is along a left-right direction illustrated in FIG. 1. Further, the electrode assembly 13 is wound 10 or more turns, e.g., 30 to 40 turns.

The non-aqueous electrolyte includes a non-aqueous solvent and an electrolyte salt dissolved in the non-aqueous solvent. Esters, ethers, nitriles, amides, and a mixed solvent of two or more types thereof, for example, may be used as the non-aqueous solvent. The non-aqueous solvent may contain a halogen substituted product obtained by substituting at least a part of hydrogen as the solvent with a halogen atom such as fluorine. A lithium salt such as LiPF₆ is used as the electrolyte salt.

The positive electrode plate 14 is an elongated member including a positive electrode core made of a metal and a positive electrode mixture layer formed on both surfaces of the positive electrode core. The positive electrode plate 14 has a strip-shaped positive electrode core exposure part 14a, by which the positive electrode core is exposed in the longitudinal direction, formed in one of its end portions in the direction perpendicular to the longitudinal direction in a deployed state. The positive electrode density of the positive electrode plate 14 is 2.600 g/cm³ or more and 3.000 g/cm³ or less. Similarly, the negative electrode plate 15 is an elongated member including a negative electrode core made of a metal and a negative electrode mixture layer formed on both surfaces of the negative electrode core, and has a strip-shaped negative electrode core exposure part 15a, by which the negative electrode core is exposed in the longitudinal direction, formed in its other end portion in the direction perpendicular to the longitudinal direction in a deployed state. The electrode assembly 13 has a structure in which the positive electrode plate 14 and the negative electrode plate 15 are wound in a flat shape with the positive electrode core exposure part 14a and the negative electrode core exposure part 15a respectively arranged on one end side (the right side in FIG. 1) in the winding axis direction and on the other end side (the left side in FIG. 1) in the winding axis direction. As a result, the electrode assembly 13 includes a flat portion 13b having a flat outer peripheral surface and two curved surface portions 13a respectively having curved outer peripheral surfaces arranged at both ends in a first direction (a left-right direction in FIG. 3) of the flat portion 13b, as indicated by a cross section in a plane perpendicular to a winding axis illustrated in FIG. 3. Each of the curved surface portions 13a is curved such that its inner periphery side is recessed. For example, the outer peripheral surface of each of the curved surface portions 13a may be arcuately curved in cross section.

As illustrated in FIG. 1, a positive electrode current collector 16 and a negative electrode current collector 18 are respectively connected to a laminated portion of the positive electrode core exposure part 14a and a laminated portion of the negative electrode core exposure part 15a. The preferable positive electrode current collector 16 is made of aluminum or an aluminum alloy. The preferable negative electrode current collector 18 is made of copper or a copper alloy. A positive electrode terminal 17 includes a flange portion 17a (FIG. 2) arranged on the battery outer side of the sealing plate 12 and an insertion part to be inserted into a through hole provided in the sealing plate 12, and is electrically connected to the positive electrode current collector 16. A negative electrode terminal 19 includes a flange portion 19a (FIG. 2) arranged on the battery outer side of the sealing plate 12 and an insertion part to be inserted into a through hole provided in the sealing plate 12, and is electrically connected to the negative electrode current collector 18.

The positive electrode terminal 17 and the positive electrode current collector 16 are fixed to the sealing plate 12, respectively, through an inner insulating member 20 and an outer insulating member 21. The inner insulating member 20 is arranged between the sealing plate 12 and the positive electrode current collector 16, and the outer insulating member 21 is arranged between the sealing plate 12 and the positive electrode terminal 17. Similarly, the negative electrode terminal 19 and the negative electrode current collector 18 are fixed to the sealing plate 12, respectively, through an inner insulating member 22 and an outer insulating member 23. The inner insulating member 22 is arranged between the sealing plate 12 and the negative electrode current collector 18, and the outer insulating member 23 is arranged between the sealing plate 12 and the negative electrode terminal 19.

The electrode assembly 13 is housed in the sheathing member 11. The sealing plate 12 is welded and connected to an opening edge of the sheathing member 11 by laser welding or the like. The sealing plate 12 has an electrolyte injection hole 26. The electrolyte injection hole 26 is sealed with a sealing plug 27 after a non-aqueous electrolyte is injected into the battery case 100.

Further, as illustrated in FIG. 3, the electrode assembly 13 comprises a winding-end tape 33 fixed to its outermost periphery and a positive electrode protection tape 35 attached to a winding-start-side end portion on the inner periphery side of the positive electrode plate 14. The winding-end tape 33 is attached to an outermost peripheral surface of the electrode assembly 13 to fix a winding-end end portion of the electrode assembly 13 to the outermost peripheral surface of the electrode assembly 13. In this example, the first separator 30 is arranged on the outermost peripheral surface of the electrode assembly 13. The winding-end tape 33 is attached to an outermost peripheral surface of the first separator 30 to span a winding-end end portion of the first separator 30 positioned on the outermost periphery of the electrode assembly 13 in a winding direction. As a result, the electrode assembly 13 is prevented from being unwound. Although a material for the winding-end tape 33 is not particularly limited, an example of the material to be used is one obtained by forming an adhesive layer on one entire surface of a resin film as a base material layer such as a polypropylene layer is used. For the base material layer, polyimide or polyethylene terephthalate, for example, can also be used.

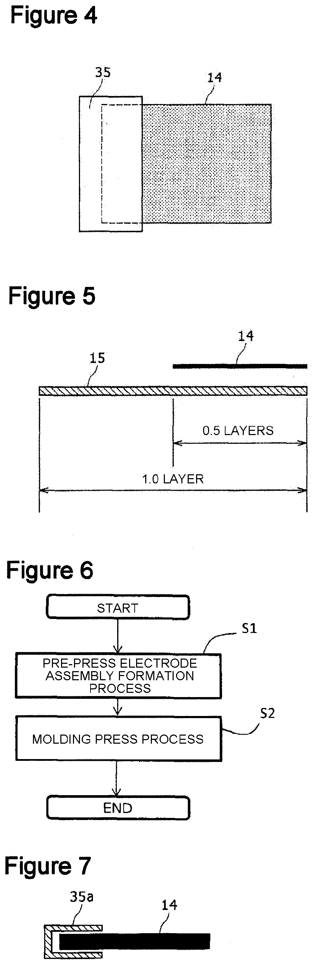

The positive electrode protection tape 35 prevents an end portion of the positive electrode plate 14, each of the separators 30 and 31, or the negative electrode plate 15 from being damaged and prevents the positive electrode mixture layer from being peeled from the positive electrode core. FIG. 4 is a diagram illustrating the winding-start-side end portion of the positive electrode plate 14 and the positive electrode protection tape 35 in the electrode assembly 13. Two positive electrode protection tapes 35 oppose each other, an adhesive layer on an inner side surface of each of the positive electrode protection tapes 35 is attached to a side surface of the end portion of the positive electrode plate 14, and portions, which protrude from the end portion of the positive electrode plate 14, of the positive electrode protection tapes 35 are attached to each other by overlapping each other. As a result, the winding-start-side end portion of the positive electrode plate 14 is covered with the two positive electrode protection tapes 35. Although a material for the positive electrode protection tapes 35 is not particularly limited, an example of the material to be used is one obtained by forming an adhesive layer on one entire surface of a resin film as a base material layer such as a polypropylene layer. For the base material layer, polyimide or polyethylene terephthalate, for example, can also be used.

In this example, the winding-end tape 33 is arranged in one (on the right side in FIG. 3) of the two curved surface portions 13a on the outer peripheral surface of the electrode assembly 13. The one curved surface portion 13a may be arranged on the lower side, although arranged on the upper side in FIG. 3. Further, the positive electrode protection tape 35 is arranged along a side surface as a curved surface of the winding-start-side end portion of the positive electrode plate 14 in the one curved surface portion 13a on the same side as the winding-end tape 33 out of the two curved surface portions 13a in the electrode assembly 13. This makes it possible to increase moldability of the electrode assembly 13 in a configuration in which the number of turns of the electrode assembly 13 is large, thereby making it possible to prevent dimensions of the electrode assembly 13 from varying at the time of manufacture.

The positive electrode plate 14, the negative electrode plate 15, and the separators 30 and 31 constituting the electrode assembly 13 will be described in detail below.

### [Positive Electrode Plate]

The positive electrode plate 14 includes the positive electrode core and the positive electrode mixture layer formed on both surfaces of the positive electrode core, as described above. A foil of a metal stable in a potential range of a positive electrode, such as aluminum or an aluminum alloy, and a film having the metal arranged on its front surface layer, for example, can be used as the positive electrode core. The positive electrode mixture layer includes a positive electrode active material, a conductive agent, a binder, and the like. The positive electrode plate 14 can be manufactured by applying a positive electrode mixture slurry containing a positive electrode active material, a conductive agent, a binder, a dispersion medium, and the like onto a positive electrode core and drying a coating film to remove the dispersion medium, followed by compression, to form a positive electrode mixture layer on both surfaces of the positive electrode core.

A lithium transition metal oxide containing a transition metal element such as Co, Mn, or Ni can be exemplified as the positive electrode active material. Examples of the lithium transition metal oxide include LiₓCoO₂, LiₓNiO₂, LiₓMnO₂, LiₓCo_{y}Ni_{1-y}O₂, LiₓCo_{y}M_{1-y}O_{z}, LiₓNi_{1-y}M_{y}O_{z}, LiₓMn₂O₄, LiₓMn_{2-y}MyO₄, LiMPO₄, and Li₂MPO₄F (M; at least one type of Na, Mg, Sc, Y, Mn, Fe, Co, Ni, Cu, Zn, Al, Cr, Pb, Sb, and B, where 0 < x ≤ 1.2, 0 < y ≤ 0.9, and 2.0 ≤ z ≤ 2.3). These may be used alone or in a mixture of a plurality of types thereof. The positive electrode active material preferably contains a lithium nickel composite oxide such as LiₓNiO₂, LiₓCo_{y}Ni_{1-y}O₂, or LiₓNi_{1-y}M_{y}O_{z} (M; at least one type of Na, Mg, Sc, Y, Mn, Fe, Co, Ni, Cu, Zn, Al, Cr, Pb, Sb, and B, where 0 < x ≤ 1.2, 0 < y ≤ 0.9, and 2.0 ≤ z ≤ 2.3) in terms of being able to increase the capacity of the battery 10.

Examples of the conductive agent used for the positive electrode mixture layer can include carbon black (CB), acetylene black (AB), Ketjen black, carbon nanotube (CNT), and carbon-based particles such as graphite. These may be used alone or in a combination of two or more types thereof. As the conductive agent used for the positive electrode mixture layer, carbon black is preferably used.

Examples of the binder used for the positive electrode mixture layer can include fluorine-based resin such as polytetrafluoroethylene (PTFE) or polyvinylidene fluoride (PVDF), polyacrylonitrile (PAN), polyimide-based resin, acrylic-based resin, and polyolefin-based resin. These may be used alone or in a combination of two or more types thereof. As the binder used for the positive electrode mixture layer, polyvinylidene fluoride is preferably used.

The positive electrode density of the positive electrode plate 14 is 2.600 g/cm³ or more and 3.000 g/cm³ or less, and preferably 2.753 g/cm³ or more and 2.902 g/cm³ or less. The length in the longitudinal direction along a winding direction of the positive electrode plate 14 is 4895 mm or more. In this example, even if the positive electrode plate 14 is thus configured to have a high positive electrode density, the moldability of the electrode assembly 13 can be increased in a configuration in which the number of turns of the electrode assembly 13 is large.

### [Negative Electrode Plate]

The negative electrode plate 15 includes the negative electrode core and the negative electrode mixture layer formed on both surfaces of the negative electrode core. The negative electrode mixture layer includes a negative electrode active material and a binder.

A foil of a metal stable in a potential range of a negative electrode, such as copper or a copper alloy, and a film having the metal arranged on its front surface layer, for example, can be used as the negative electrode core. The negative electrode plate 15 can be manufactured by applying a negative electrode mixture slurry containing a negative electrode active material, a binder, a dispersion medium, and the like onto a negative electrode core and drying a coating film to remove the dispersion medium, followed by compression, to form a negative electrode mixture layer on both surfaces of the negative electrode core.

For the negative electrode mixture layer, the negative electrode active material is not particularly limited if it can reversibly occlude and release lithium ions, and, for example, a carbon material such as natural graphite or artificial graphite, a metal to be alloyed with lithium, such as silicon (Si) or tin (Sn), an alloy containing a metal element such as Si or Sn, a complex oxide, and the like can be used. As the negative electrode active material, a carbon material is preferably used, and natural graphite is more preferably used. Negative electrode active materials may be used alone or in a combination of two or more types thereof.

The negative electrode density of the negative electrode plate 15 is 1.52 g/cm³ or more. The length in the longitudinal direction along a winding direction of the negative electrode plate 15 is 5115 mm or more.

### [Separator]

For each of the separators 30 and 31, a porous sheet having ion permeability and electrical insulation is used. Specific examples of the porous sheet can include a microporous thin film, a woven fabric, and a non-woven fabric. As a material for the separators 30 and 31, olefin resin such as polyethylene or polypropylene, cellulose, or the like is preferably used. Each of the separators 30 and 31 may be a laminate having a cellulosic fibrous layer or a fibrous layer of thermoplastic resin such as olefinic-based resin. Each of the separators 30 and 31 may be a multi-layer separator including a polyethylene layer and a polypropylene layer, or may be a separator having a material such as aramidbased resin or ceramic applied on its surface. For example, each of the separators 30 and 31 may be a three-layer separator including a polyethylene layer, a polypropylene layer, and a polyethylene layer.

### [Winding-Start End Positions of Positive Electrode Plate and Negative Electrode Plate]

A winding-start-side end portion on the inner periphery side of the negative electrode plate 15 is positioned closer to the inner periphery side than the winding-start-side end portion of the positive electrode plate 14 by 1.0 layer. FIG. 5 is a diagram illustrating a positional relationship between respective winding-start-side end portions of the positive electrode plate 14 and the negative electrode plate 15 when it is assumed that the winding-start-side end portion of the negative electrode plate 15 is positioned closer to the inner periphery side than the winding-start-side end portion of the positive electrode plate 14 by 0.5 layers in the electrode assembly 13 illustrated in FIG. 3. The winding-start-side end portion of the negative electrode plate 15 positioned in a range indicated by an arrow A illustrated in FIG. 3 is illustrated in an example illustrated in FIG. 5. In FIG. 5, it is assumed that the negative electrode plate 15 has a linear shape in the range indicated by the arrow A. In this case, the range indicated by the arrow A is 1.0 layer, and the winding-start-side end portion of the negative electrode plate 15 is positioned closer to the inner periphery side than the winding-start-side end portion of the positive electrode plate 14 by 1.0 layer in an example illustrated in FIG. 3. As a result, when the positive electrode protection tape 35 is arranged along a side surface as a curved surface of the winding-start-side end portion of the positive electrode plate 14 in the one curved surface portion 13a in the electrode assembly 13, as described above, if the winding-start-side end portion of the positive electrode plate 14 is positioned in the one curved surface portion 13a or the vicinity thereof, the winding-start-side end portion of the negative electrode plate 15 can be positioned in the other curved surface portion 13a or the vicinity thereof. As a result, the winding-start-side end portion of the negative electrode plate 15 is not arranged close to a central portion in the longitudinal direction (the left-right direction in FIG. 3) of the flat portion 13b. Accordingly, if the pre-press electrode assembly wound such that its outer peripheral surface has a cylindrical shape is pressed in one direction using a press working machine to form the electrode assembly 13 in a flat-shape, the flat portion 13b is easily formed so that the moldability of the electrode assembly 13 can be increased.

### [Method for Manufacturing Battery]

FIG. 6 is a flow chart illustrating a method for manufacturing a battery according to an example of the embodiment. A method for manufacturing the battery 10 includes a pre-press electrode assembly formation process and a subsequent molding press process. Specifically, in step S1 illustrated in FIG. 6, a pre-press electrode assembly formation process is performed in which the first separator 30, the positive electrode plate 14, the second separator 31, and the negative electrode plate 15 are wound 10 or more turns, e.g., 30 to 40 turns by overlapping one another such that the first separator 30 or the second separator 31 is interposed between at least the positive electrode plate 14 and the negative electrode plate 15 to form a pre-press electrode assembly having a cylindrical outer peripheral surface. Then, in step S2, a molding press process is performed in which the pre-press electrode assembly is pressed at normal temperature using a press working machine to be crushed in an up-down direction illustrated in FIG. 3 perpendicular to the first direction to form the electrode assembly 13 in a flat-shape illustrated in FIG. 3.

Although the two positive electrode protection tapes 35 to be attached to the winding-start-side end portion of the positive electrode plate 14 are made to overlap each other in the configuration illustrated in FIG. 3, the present invention is not limited to this. FIG. 7 illustrates a positive electrode protection tape 35a in another example attached to the winding-start-side end portion of the positive electrode plate 14. In a configuration in the other example illustrated in FIG. 7, the one positive electrode protection tape 35a is folded in its intermediate portion and is formed into a U shape in cross section such that both end side portions of the positive electrode protection tape 35a are respectively attached to both side surfaces of the winding-start-side end portion of the positive electrode plate 14, and the winding-start-side end portion of the positive electrode plate 14 is covered with the positive electrode protection tape 35a.

The battery 10 and the method for manufacturing the same, described above, make it possible to increase the moldability of the electrode assembly 13 in a configuration in which the number of turns of the electrode assembly 13 is as large as 10 or more, thereby making it possible to prevent dimensions of the electrode assembly 13 from varying at the time of manufacture. Specifically, the winding-end tape 33 attached to the outermost peripheral surface of the electrode assembly 13 is arranged in the one curved surface portion 13a in the electrode assembly 13. As a result, the winding-end tape 33 is not arranged in the flat portion 13b facing a crushing direction of the electrode assembly 13. Thus, the electrode assembly 13 is uniformly crushed, and pressure can be efficiently applied in a thickness direction of the electrode assembly 13, whereby the flat portion 13b is easily formed. Further, when the positive electrode protection tape 35 is attached to the winding-start-side end portion of the positive electrode plate 14, the winding-start-side end portion easily slips between itself and other members such as the separators 30 and 31. Thus, responsiveness to pressing of the electrode assembly 13 can be increased. As a result, the pre-press electrode assembly having a cylindrical outer peripheral surface is easily molded into the electrode assembly 13 in a flat-shape. Even if the positive electrode protection tape 35 is arranged along a curved surface of the winding-start-side end portion of the positive electrode plate 14 in the one curved surface portion 13a, the electrode assembly 13 is uniformly crushed, whereby the flat portion 13b is more easily formed. This makes it possible to increase the moldability of the electrode assembly 13 in a configuration in which the number of turns of the electrode assembly 13 is large, thereby making it possible to prevent dimensions such as the thickness of the electrode assembly 13 from varying at the time of manufacture.

Further, the winding-start-side end portion on the inner periphery side of the negative electrode plate 15 is positioned closer to the inner periphery side than the winding-start-side end portion of the positive electrode plate 14 by 1.0 layer. This also makes it easy to form the flat portion 13b, as described above, thereby making it possible to more increase the moldability of the electrode assembly 13. This configuration makes it possible to increase a cushioning property in an inner periphery side portion of the electrode assembly 13. This configuration further makes it possible to increase the moldability of the electrode assembly 13, thereby allowing production of the electrode assembly 13 that hardly varies in dimensions with a low press pressure.

Hereinafter, the electrode assembly 13 in the battery 10 according to the present disclosure will be further described with reference to an example, and electrode assemblies in batteries in comparative examples 1 to 4 will be described.

### <Example>

### [Production of Positive Electrode Plate]

An approximate amount of N-methyl-2-pyrrolidone (NMP) was added to a mixture of a lithium-containing metal composite oxide represented by LiNi_{0.35}Co_{0.35}Mn_{0.30}O₂ as a positive electrode active material, carbon black as a conductive agent, and polyvinylidene fluoride (PVdF) as a binder at a solid mass ratio of 96:3:1, and blended to prepare a positive electrode mixture slurry. The positive electrode mixture slurry was applied to both surfaces of a positive electrode core composed of an aluminum foil having a thickness of 15 µm, and a coating film was dried, was then compressed using a compression roller, and was cut to a predetermined electrode size, to produce a positive electrode plate 14 having a positive electrode mixture layer formed on both surfaces of the positive electrode core. The thickness of the positive electrode mixture layer was set to 76 µm on one surface side after compression processing. The length in a direction perpendicular to a longitudinal direction of the positive electrode plate 14 was set to 131.8 mm. The width of a positive electrode core exposure part 14a in one end portion in the direction perpendicular to the longitudinal direction (the length in the direction perpendicular to the longitudinal direction) of the positive electrode plate 14 was set to 15.2 mm. The length in the longitudinal direction along a winding direction of the positive electrode plate 14 was set to 4950 mm. Further, the positive electrode density of the positive electrode plate 14 was set to 2.800 g/cm³.

### [Production of Negative Electrode Plate]

Graphite powder as a negative electrode active material, a sodium salt of carboxymethyl cellulose (CMC), and a dispersion of styrene-butadiene rubber (SBR) as a binder were mixed at a solid mass ratio of 98:1:1, and water was used as a dispersion medium, to prepare a negative electrode mixture slurry. The negative electrode mixture slurry was applied to both surfaces of a negative electrode core composed of a copper foil having a thickness of 10 µm, and a coating film was dried, was then compressed using a compression roller, and was cut to a predetermined electrode size, to produce a negative electrode plate 15 having a negative electrode mixture layer on both surfaces of the negative electrode core. The thickness of the negative electrode mixture layer was set to 67 µm on one surface side after compression processing. The length in a direction perpendicular to a longitudinal direction of the negative electrode plate 15 was set to 133.8 mm. The width of a negative electrode core exposure part 15a in the other end portion in the direction perpendicular to the longitudinal direction (the length in the direction perpendicular to the longitudinal direction) of the negative electrode plate 15 was set to 10.0 mm. The length in the longitudinal direction along a winding direction of the negative electrode plate 15 was set to 5150 mm.

### [Production of Separator]

As each of a first separator 30 and a second separator 31, a three-layer separator including a polyethylene layer, a polypropylene layer, and a polyethylene layer was used. The thickness of each of the separators 30 and 31 was set to 14 µm, and the length (width) in the direction perpendicular to the longitudinal direction was set to 127 mm.

### [Production of Electrode Assembly]

The first separator 30, the positive electrode plate 14, the second separator 31, and the negative electrode plate 15 were wound 10 or more turns such that their outer peripheral surface has a cylindrical shape by overlapping one another such that the first separator 30 or the second separator 31 was interposed between the positive electrode plate 14 and the negative electrode plate 15, followed by crushing in a radial direction using press working, to produce an electrode assembly 13 in a wound flat-shape. At this time, a core exposure part of the positive electrode plate 14 and a core exposure part of the negative electrode plate 15 were shifted not to respectively overlap active material layers of electrode plates opposing thereto, and the core exposure part of the positive electrode plate 14 was arranged on the one end side in a winding axis direction of the electrode assembly 13 and the core exposure part of the negative electrode plate 15 was arranged on the other end side in the winding axis direction. The winding-end tape 33 was attached to an outermost peripheral surface of the electrode assembly 13 to fix a winding-end end portion of the electrode assembly 13 to the outermost peripheral surface of the electrode assembly 13. The winding-end tape 33 was arranged in the one curved surface portion 13a in the electrode assembly 13. A positive electrode protection tape 35 was attached to a winding-start-side end portion on the inner periphery side of the positive electrode plate 14. The positive electrode protection tape 35 was arranged along a curved surface of the winding-start-side end portion of the positive electrode plate 14 in the one curved surface portion 13a in the electrode assembly 13. A winding-start-side end portion on the inner periphery side of the negative electrode plate 15 was positioned closer to the inner periphery side than the winding-start-side end portion of the positive electrode plate 14 by 1.0 layer.

<Comparative Example 1>

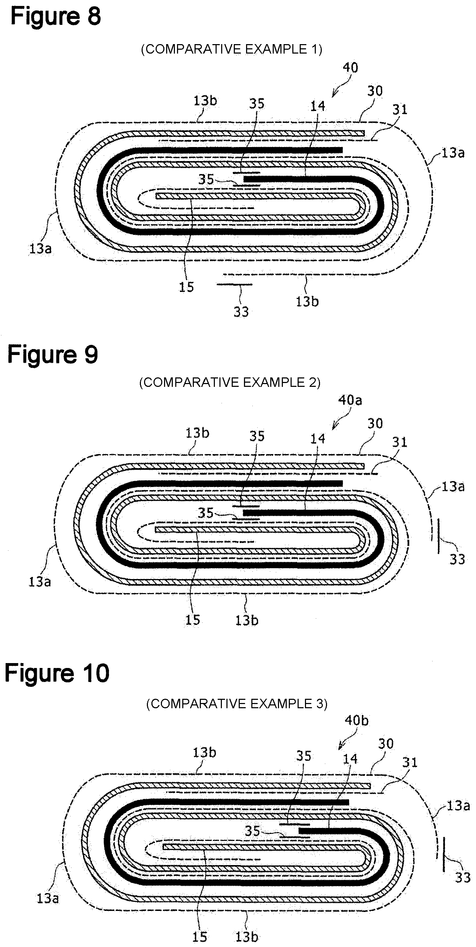

FIG. 8 is a diagram corresponding to FIG. 3 in an electrode assembly 40 constituting a battery in a comparative example 1. As illustrated in FIG. 8, in the electrode assembly 40 in the comparative example 1, a winding-end tape 33 attached to an outermost peripheral surface of the electrode assembly 40 was arranged on an outer side surface of a flat portion 13b in the electrode assembly 40. A positive electrode protection tape 35 was attached to a winding-start-side end portion of a positive electrode plate 14, and the positive electrode protection tape 35 was arranged in an inner periphery side portion of a flat portion 13b in the electrode assembly 40. Further, a winding-start-side end portion on the inner periphery side of a negative electrode plate 15 was positioned closer to the inner periphery side than the winding-start-side end portion of the positive electrode plate 14 by 0.5 layers. Other components were made similar to those in the example, to produce the electrode assembly 40 in the comparative example 1.

### <Comparative Example 2>

FIG. 9 is a diagram corresponding to FIG. 3 in an electrode assembly 40a constituting a battery in a comparative example 2. As illustrated in FIG. 9, in the electrode assembly 40a in the comparative example 2, a positive electrode protection tape 35 was attached to a winding-start-side end portion of a positive electrode plate 14, and the positive electrode protection tape 35 was arranged in an inner periphery side portion of a flat portion 13b in the electrode assembly 40a. Further, a winding-start-side end portion on the inner periphery side of a negative electrode plate 15 was positioned closer to the inner periphery side than the winding-start-side end portion of the positive electrode plate 14 by 0.5 layers. Other components were made similar to those in the example, to produce the electrode assembly 40a in the comparative example 2.

### <Comparative Example 3>

FIG. 10 is a diagram corresponding to FIG. 3 in an electrode assembly 40b constituting a battery in a comparative example 3. As illustrated in FIG. 10, in the electrode assembly 40b in the comparative example 3, a positive electrode protection tape 35 was attached to a winding-start-side end portion of a positive electrode plate 14, and the positive electrode protection tape 35 was arranged in an inner periphery side portion of a flat portion 13b in the electrode assembly 40b. Further, a winding-start-side end portion on the inner periphery side of a negative electrode plate 15 was positioned closer to the inner periphery side than the winding-start-side end portion of the positive electrode plate 14 by 0.8 layers. Other components were made similar to those in the example, to produce the electrode assembly 40b in the comparative example 3.

### <Comparative Example 4>

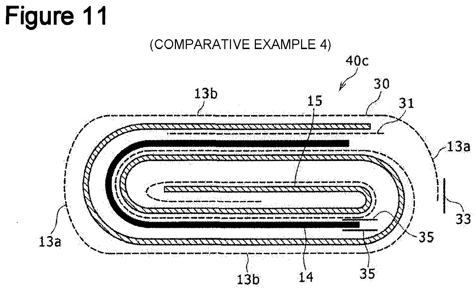

FIG. 11 is a diagram corresponding to FIG. 3 in an electrode assembly 40c constituting a battery in a comparative example 4. As illustrated in FIG. 11, in the electrode assembly 40c in the comparative example 4, a positive electrode protection tape 35 was attached to a winding-start-side end portion of a positive electrode plate 14, and the positive electrode protection tape 35 was arranged in an inner periphery side portion of a flat portion 13b in the electrode assembly 40c. Further, a winding-start-side end portion on the inner periphery side of a negative electrode plate 15 was positioned closer to the inner periphery side than the winding-start-side end portion of the positive electrode plate 14 by 1.2 layers. Other components were made similar to those in the example, to produce the electrode assembly 40c in the comparative example 4.

### [Evaluation Method]

The five types of electrode assemblies 13, 40, and 40a to 40c in the above-described example and comparative examples 1 to 4 were used to measure respective variations σ in thickness of the electrode assemblies 13, 40, and 40a to 40c and evaluate comparison among the variations σ. Specifically, for the electrode assemblies 13, 40, and 40a to 40c in the example and the comparative examples 1 to 4, flat-shaped electrode assemblies 13, 40, and 40a to 40c were molded to crush pre-press electrode assemblies each having a cylindrical outer peripheral surface in a radial direction with a predetermined press pressure and in a predetermined time period using a press working machine. The respective thicknesses in a crushing direction of the electrode assemblies 13, 40, and 40a to 40c were measured using a laser displacement meter with the molded electrode assemblies 13, 40, and 40a to 40c clamped by a jig and a load of 10 gf applied thereto. Five types of electrode assemblies 13, 40, and 40a to 40c, the respective numbers of which were ten, were consecutively molded, and the respective thicknesses of the electrode assemblies 13, 40, and 40a to 40c were measured to perform recording, to respectively confirm variations (standard deviations) σ in thickness for the five types of electrode assemblies 13, 40, and 40a to 40c.

### [Evaluation Results]

Table 1 illustrates, for each of the electrode assemblies 13, 40, and 40a to 40c in the example and the comparative examples 1 to 4, a variation σ in thickness of the electrode assembly, a positive electrode density, a position of the winding-end tape 33 and a position of the positive electrode protection tape 35, the presence or absence of the positive electrode protection tape 35, and an excess negative electrode of an inner peripheral portion, i.e., a length by which a winding-start end of the negative electrode plate 15 extends toward the inner periphery side with respect to a winding-start end of the positive electrode plate 14.

**[Table 1]**

| | **Example** | **Comparative example 1** | **Comparative example 2** | **Comparative example 3** | **Comparative example 4** |
|---|---|---|---|---|---|
| Variation σ (mm) in thickness of electrode assembly | 0.022 | 0.152 | 0.100 | 0.060 | 0.045 |
| Positive electrode density (g/cm³) | 2.800 | 2.800 | 2.800 | 2.800 | 2.800 |
| Position of winding-end tape | R portion | Flat | R portion | R portion | R portion |
| Position of positive electrode protection tape | R portion | Flat | Flat | Flat | Flat |
| Presence or absence of positive electrode protection tape | Presence | Presence | Presence | Presence | Presence |
| Excess negative electrode of inner peripheral portion | 1.0 layer | 0.5 layers | 0.5 layers | 0.8 layers | 1.2 layers |

In Table 1, "R portion" means one or the other of the curved surface portions 13a in each of the electrode assemblies 13, 40, and 40a to 40c, and "Flat" means the flat portion 13b of each of the electrode assemblies 13, 40, and 40a to 40c.

From evaluation results illustrated in Table 1, a variation in thickness of the electrode assembly 13 in the example could be made significantly smaller than respective variations in thickness of the electrode assemblies 40 and 40a to 40c in the comparative examples 1 to 4. The reason for this may be that moldability was increased by arranging the winding-end tape 33 and the positive electrode protection tape 35 in one of the curved surface portions 13a in the electrode assembly 13 and positioning the winding-start-side end portion on the inner periphery side of the negative electrode plate 15 closer to the inner periphery side than the winding-start-side end portion of the positive electrode plate 14 by 1.0 layer.

Although a case where the winding-end tape 33 and the positive electrode protection tape 35 are arranged in the curved surface portion 13a on the same side in the electrode assembly 13 has been described in the above-described embodiment and examples, the present disclosure is not limited to this, but the winding-end tape 33 and the positive electrode protection tape 35 may be respectively arranged in the two different curved surface portions 13a in the electrode assembly 13. For example, the winding-end tape 33 may be arranged in one of the two curved surface portions 13a, and the positive electrode protection tape 35 may be arranged along a curved surface of the winding-start-side end portion of the positive electrode plate 14 in the other curved surface portion 13a.

### REFERENCE SIGNS LIST

10 non-aqueous electrolyte secondary battery (battery)
11 sheathing member
12 sealing plate
13 electrode assembly
13a curved surface portion
13b flat portion
14 positive electrode plate
14a positive electrode core exposure part
15 negative electrode plate
15a negative electrode core exposure part
16 positive electrode current collector
17 positive electrode terminal
18 negative electrode current collector
19 negative electrode terminal
20, 22 inner insulating member
21, 23 outer insulating member
24 insulation sheet
26 electrolyte injection hole
27 sealing plug
30 first separator
31 second separator
33 winding-end tape
35, 35a positive electrode protection tape
40, 40a to 40c electrode assembly
100 battery case

## Claims

1. A non-aqueous electrolyte secondary battery comprising:
an electrode assembly in which a first separator, a positive electrode plate, a second separator, and a negative electrode plate are wound 10 or more turns by overlapping one another such that the first separator or the second separator is interposed between at least the positive electrode plate and the negative electrode plate,
the electrode assembly including a flat portion having a flat outer peripheral surface and two curved surface portions respectively arranged at both ends in a first direction of the flat portion and each having a curved outer peripheral surface;
a winding-end tape attached to an outermost peripheral surface of the electrode assembly to fix a winding-end end portion of the electrode assembly to the outermost peripheral surface of the electrode assembly; and
a positive electrode protection tape attached to a winding-start-side end portion on the inner periphery side of the positive electrode plate, wherein
the winding-end tape is arranged in one of the two curved surface portions, and
the positive electrode protection tape is arranged along a curved surface of the winding-start-side end portion of the positive electrode plate in one or the other of the two curved surface portions.

2. The non-aqueous electrolyte secondary battery according to claim 1, wherein
a positive electrode density of the positive electrode plate is 2.600 g/cm³ or more and 3.000 g/cm³ or less.

3. The non-aqueous electrolyte secondary battery according to claim 2, wherein
the positive electrode density is 2.753 g/cm³ or more and 2.902 g/cm³ or less.

4. The non-aqueous electrolyte secondary battery according to any one of claims 1 to 3, wherein
a winding-start-side end portion on the inner periphery side of the negative electrode plate is positioned closer to the inner periphery side than a winding-start-side end portion of the positive electrode plate by 1.0 layer.

5. The non-aqueous electrolyte secondary battery according to any one of claims 1 to 4, wherein
a negative electrode density of the negative electrode plate is 1.52 g/cm³ or more, a length in a longitudinal direction along a winding direction of the positive electrode plate is 4895 mm or more, and a length in a longitudinal direction along a winding direction of the negative electrode plate is 5115 mm or more.

6. A method for manufacturing the non-aqueous electrolyte secondary battery according to any one of claims 1 to 5, the method including:
a pre-press electrode assembly formation step in which the first separator, the positive electrode plate, the second separator, and the negative electrode plate are wound 10 or more turns by overlapping one another such that the first separator or the second separator is interposed between at least the positive electrode plate and the negative electrode plate to form a pre-press electrode assembly; and
a molding press step in which the pre-press electrode assembly is pressed in a direction perpendicular to the first direction to mold the electrode assembly in a flat-shape after the pre-press electrode assembly formation step.
